# FASCICULE DE BREVET EUROPEEN

(11) **EP 0 452 385 B1**
(45) Date de publication et mention de la délivrance du brevet: **22.06.1994**
(21) Numéro de dépôt: 90901647.9
(22) Date de dépôt: 05.01.1990
(51) Int. Cl.: G01F 11/04

(54) **DISPOSITIF DE DOSAGE DE PRODUITS PATEUX, NOTAMMENT D'EMULSIONS DE VIANDE OU D'AUTRES PROTEINES**
VORRICHTUNG ZUM DOSIEREN VON ERZEUGNISSEN IN PASTENFORM, INSBESONDERE FLEISCH ODER SONSTIGEN PROTEINEMULSIONEN
DEVICE FOR DOSING PRODUCTS IN PASTE FORM, IN PARTICULAR MEAT OR OTHER PROTEIN EMULSIONS

(30) Priorité: 06.01.1989 FR 8900107
(43) Date de publication de la demande: 23.10.1991
(73) Titulaire: UNISABI SA, F-45550 Saint-Denis de l'Hotel (FR)
(72) Inventeur: HUDKOVIC, Robert, D-2807 Achim (DE); MENGEL, Erich, D-2810 Verden (DE); TRACHEZ, Bruno, D-2816 Kirchlinteln (DE)
(74) Mandataire: Ahner, Francis
(86) Numéro de dépôt international: FR9000008
(87) Numéro de publication internationale: WO9007695

(56) Documents cités:
- US-A- 2 356 420

## Description

La présente invention concerne un dispositif de dosage de produits pâteux.

Elle s'applique notamment, mais de façon non limitative, au dosage des émulsions de viande ou d'autres protéines conditionnées dans des récipients tels que des boîtes ou des barquettes.

Par "produits pâteux", on entendra un produit susceptible de former une masse adhérente mais dont la consistance lui permet néanmoins d'être pompée, c'est-à-dire que l'on pourra faire s'écouler cette masse cohérente en lui appliquant une pression, soit mécaniquement (action d'un piston) soit pneumatiquement (par mise sous pression d'une cuve).

Pour le remplissage des récipients par des produits pâteux, on se trouve généralement confronté à une double exigence de propreté du remplissage et de précision du dosage.

En premier lieu, il est nécessaire de remplir proprement le récipient sans salir ses bords, la propreté absolue des zones de fermeture étant nécessaire pour garantir une étanchéité parfaite, tout particulièrement dans le cas où cette fermeture est exécutée par thermoscellage.

Cette exigence entraîne des difficultés particulières dans le cas où le produit pâteux est de texture fibreuse, ce qui augmente encore la masse de produit susceptible d'adhérer à la tête de dosage, les fibres pendantes étant susceptibles de venir souiller les zones de fermeture du récipient au moment de l'amenée ou de l'éloignement de celui-ci.

En second lieu, on recherche la meilleure précision possible du dosage afin d'assurer un remplissage le plus complet du récipient avec un volume résiduel, ou espace de tête de fermeture, minimum.

Les dispositifs de dosage volumétrique utilisés jusqu'à présent comprennent généralement, pour un assurer un dosage précis, un piston de dosage coulissant dans un cylindre relié d'une part à une conduite d'alimentation communiquant avec une enceinte mise sous pression contenant le produit pâteux et d'autre part à une conduite de refoulement permettant de délivrer la dose de produit vers le récipient

Des systèmes de vannes placées sur la conduite d'alimentation et sur la conduite de refoulement assurent un séquencement correct des phases de pompage (remplissage/refoulement) en synchronisme avec le mouvement du piston.

Pour obtenir la propreté du remplissage, on prévoit en sortie de la conduite de refoulement un système de coupe, par exemple à guillotine, qui permet d'isoler la dose finale du volume mort de produit subsistant dans la conduite de refoulement et dans le cylindre de dosage.

Ce système, outre sa complexité mécanique (vannes à synchroniser avec le déplacement du piston, système de guillotine,...) présente l'inconvénient de toujours laisser subsister un volume mort où le produit est susceptible de s'accumuler et, de ce fait, ce volume mort risque de nuire à la qualité biologique du produit que l'on dose en raison du développement possible de germes dans ce volume mort.

L'état de la technique antérieure peut être illustré par US-A-2 356 420, qui est cependant exclusivement réservé au dosage de liquides, plus particulièrement au dosage de liquides moussants, tels que le lait. Pareil dispositif ne peut être utilisé pour le dosage de produits pâteux. En particulier, il est clair que le piston doseur du dispositif selon US-A-2 356 420 ne peut pas traverser le tiroir distributeur pour venir affleurer la seconde ouverture du tiroir. Dans de telles conditions, il subsiste une certaine quantité de liquide sur les parois de l'ouverture du tiroir de distribution du dispositif selon US-A-2 356 420, ce qui est contraire au but recherché par le dispositif objet de la présente invention.

La présente invention se propose de résoudre ces inconvénients avec un dispositif de dosage volumétrique qui soit mécaniquement très simple et permette notamment d'éliminer les vannes des conduites d'alimentation et de refoulement ainsi que la guillotine du dispositif de coupe finale.

Par ailleurs et surtout, comme on le verra, le dispositif de l'invention permet de supprimer totalement le volume mort du système de distribution, le dispositif étant conçu de telle sorte que la dose de produit pompée dans le cylindre soit entièrement et directement refoulée dans le récipient, assurant ainsi à la fois la précision du dosage et l'élimination recherchée des volumes morts.

On verra également que le dispositif de l'invention permet, très simplement, de protéger les zones de fermeture du récipient de toute trace éventuelle de produit qui se trouverait suspendu au-dessus du récipient avant évacuation de celui-ci ; ceci est tout particulièrement avantageux en ce qui concerne les produits ayant une texture plus ou moins fibreuse, comme c'est souvent le cas avec les émulsions de viande.

A cet effet, le dispositif de la présente invention est caractérisé en ce qu'il comprend :
- une chambre de dosage (5) pourvue à l'une de ses extrémités d'une ouverture commune (15) de remplissage et de refoulement,
- dans cette chambre de dosage, un piston doseur (6) mobile axialement d'une position de référence, ne laissant pas subsister de volume résiduel à l'intérieur de la chambre de dosage, à une position relevée définissant le volume de dosage,
- des moyens (1-4) d'alimentation en produit pâteux sous pression,
- un cylindre de distribution (10), orienté transversalement par rapport à la chambre de dosage et pourvu latéralement d'une première ouverture (15) coïncidant avec l'ouverture de remplissage et de refoulement du piston doseur, d'une deuxième ouverture (16) située dans l'axe longitudinal du piston doseur, en regard de cette première ouverture, et d'une troisième ouverture (14) décalée le long de l'axe du tiroir distributeur, par rapport aux deux premières et communiquant avec les moyens d'alimentation en produit pâteux,
- dans ce cylindre de distribution, un tiroir distributeur (11) comportant un conduit latéral (17) de mise en communication entre deux points décalés l'un par rapport à l'autre le long de l'axe du tiroir distributeur, et un conduit axial (19) de mise en communication entre deux points situés en regard dans l'axe longitudinal du piston doseur, ce tiroir distributeur étant mobile axialement entre, successivement :
   a) une position de remplissage où le conduit latéral (17) met en communication lesdites première et troisième ouvertures (14,15) et occulte ladite deuxième ouverture (16) du cylindre de distribution de manière à permettre le remplissage de la chambre de dosage par les moyens d'alimentation,
   b) une position d'isolement où, après que le piston doseur ait atteint sa position relevée, les trois ouvertures (14,15,16) du cylindre de distribution sont occultées
   c) une position de refoulement où, pendant que le piston doseur est abaissé vers sa position de référence, la troisième ouverture (14) restant occultée, le conduit axial (19) met en communication lesdites première et deuxième ouvertures (15,16) de manière à refouler la dose de produit pâteux dans un récipient (20) préalablement placé en regard de la deuxième ouverture, la position limite inférieure du piston doseur (6) étant atteinte lorsque ce dernier affleure la deuxième ouverture (16) ou en émerge légèrement de manière à ne laisser subsister aucune quantité de produit pâteux dans les volumes morts du dispositif, et
   d) à nouveau la position de remplissage précitée, après que le piston doseur (6) occupe sa position de référence
- des moyens (8,9,12,13) d'actionnement sélectif du piston doseur et du tiroir distributeur, étant entendu que le diamètre extérieur du piston doseur (6) correspond au diamètre intérieur des première et deuxième ouvertures (15,16) ainsi que du conduit axial (19).

Très avantageusement, à la position (c) et après refoulement, le piston doseur est relevé à une position intermédiaire au-dessus de sa position de référence, de manière à entraîner à distance du récipient la masse de produit pâteux adhérente restant attachée au piston après refoulement.

Dans ce dernier cas, entre les positions (c) et (f) précitées, le cylindre distributeur passe de préférence par : (d) une autre position d'isolement, permettant d'éloigner le récipient rempli, ainsi isolé de la masse de produit pâteux adhérente restant attachée au piston après refoulement.

De la même façon, avant la position (f) précitée, le cylindre distributeur passe de préférence par : (e) une autre position de refoulement où le piston doseur est déplacé de sa position intermédiaire vers sa position de référence de manière à refouler dans le conduit axial la masse de produit pâteux adhérente restant attachée au piston, les dimensions de ce conduit axial étant choisies suffisantes pour que cette masse adhérente refoulée ne déborde pas du conduit axial par la seconde ouverture du cylindre de distribution.

Selon une autre caractéristique avantageuse, la première ouverture du cylindre de distribution et le conduit axial du tiroir distributeur sont sensiblement de même section que le piston doseur de sorte que, en position de refoulement, le piston doseur puisse être abaissé au-delà de sa position de référence, de manière à pénétrer dans le conduit axial du tiroir distributeur.

Dans ce dernier cas, la deuxième ouverture du cylindre de distribution est, aussi, sensiblement de même section que le piston doseur de sorte que, en position de refoulement, le piston doseur pénètre totalement dans le conduit axial du tiroir distributeur et émerge du cylindre de distribution par cette deuxième ouverture.

D'autres caractéristiques et avantages de l'invention apparaîtront à la lecture de la description ci-dessous d'un mode de réalisation détaillé et des différentes étapes de son fonctionnement, en référence aux dessins annexés sur lesquels :

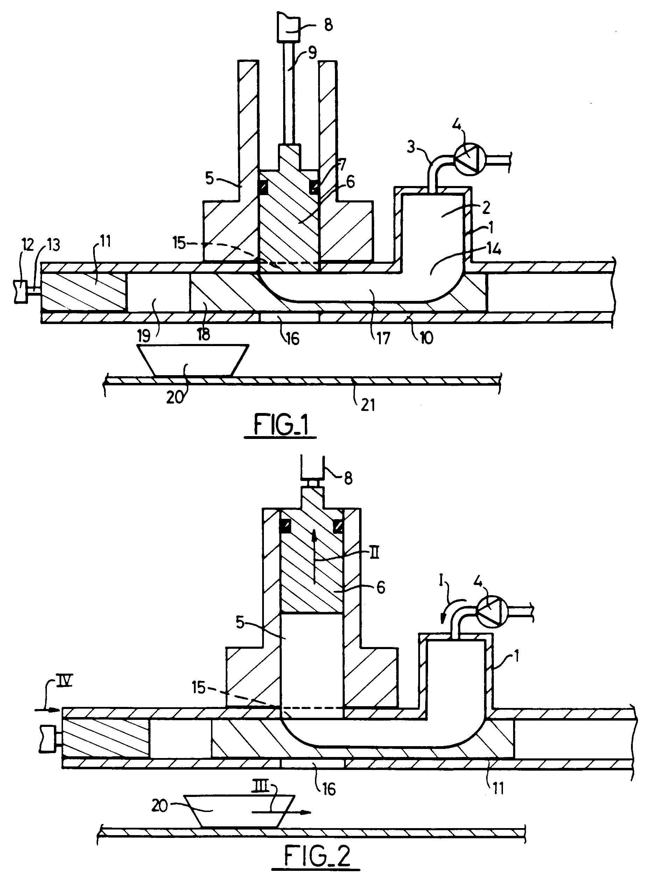

- les figures 1 à 5 montrent le dispositif de dosage de la présente invention dans ses phases successives de fonctionnement.

Ces figures représentent toutes les mêmes éléments de dispositif, mais dans des positions différentes ; les mêmes références numériques sont toujours utilisées pour désigner des éléments identiques.

La figure 1 illustre l'ensemble des éléments du dispositif de dosage selon l'invention, dans la configuration que celui-ci occupe en début de cycle, c'est-à-dire avant remplissage de la chambre de dosage.

Ce dispositif comprend tout d'abord un système d'alimentation en produit pâteux, avec une enceinte 1 formant volume tampon pour le produit pâteux 2 délivré depuis une cuve de stockage via une conduite d'alimentation 3. Le produit pâteux est forcé dans l'enceinte tampon 1 par mise sous pression, par exemple au moyen d'une pompe 4 insérée dans la conduite d'alimentation 3 (ou, en variante ou en complément, par mise sous pression du volume résiduel au sommet de la cuve de stockage).

Le produit pâteux est dosé au moyen d'une chambre de dosage 5 dans laquelle coulisse un piston doseur 6 pourvu si nécessaire d'un segment d'étanchéité 7. Le mouvement du piston doseur est réalisé par exemple par un vérin 8 auquel il est relié par la tige 9, de manière à permettre une course du piston doseur entre une position de référence (la position illustrée figure 1) où le piston doseur est abaissé jusqu'au fond de la chambre de dosage, sans volume mort, et une position relevée (illustrée sur la figure 2) définissant le volume de la dose de produit pâteux à délivrer.

La chambre de dosage 5 est en forme de cylindre sans fond d'axe vertical. On notera que la disposition verticale de la chambre de dosage est généralement celle qui est la plus satisfaisante compte tenu de la tendance du produit pâteux à s'écouler par gravité ; cette disposition, bien que préférentielle, n'est cependant pas indispensable à la mise en oeuvre du dispositif de l'invention, et bien que l'on utilisera des termes tels que "position relevée", "abaissement du piston",... ces termes ne doivent pas être considérés comme exclusifs de toute autre disposition possible des différents éléments.

Perpendiculairement à la chambre de dosage 5 est prévu un cylindre de distribution 10 (qui est donc horizontal dans la configuration préférentielle) dans lequel coulisse axialement un tiroir distributeur 11 sous l'action par exemple d'un vérin 12 auquel il est relié par la tige 13.

Le cylindre de distribution 10 est pourvu de trois ouvertures latérales.

La première de ces ouvertures, l'ouverture 15 en partie supérieure, est confondue avec le fond de la chambre de dosage 5 ; cette première ouverture 15 a même section que le chambre de dosage 5, de sorte que le piston doseur 6, lorsqu'il est à sa position de référence (la position illustrée figure 1), pénètre, au-delà du fond de la chambre de dosage 5, à l'intérieur de cette ouverture 15 et vient en contact avec le tiroir distributeur 11, ne laissant ainsi subsister aucun volume mort à cet endroit.

La seconde ouverture 16 du cylindre de distribution est formée en partie inférieure, juste en vis-à-vis de la première ouverture 15 et avec les mêmes dimensions que celle-ci.

Enfin, le cylindre de distribution 10 comporte une troisième ouverture 14 décalée axialement par rapport aux deux premières ouvertures 15 et 16, et communiquant directement avec l'enceinte tampon 1 d'alimentation en produit pâteux. Sur le dessin, on a représenté cette ouverture 14 en partie supérieure du cylindre de distribution 10, mais cette disposition n'est pas indispensable, la gravité ne jouant aucun rôle en ce qui concerne l'alimentation en produit pâteux puisque celui-ci est délivré sous pression par les moyens appropriés indiqués plus haut.

Le tiroir distributeur 11, quant à lui, est formé de trois parties successives.

La première de ces parties comporte une cavité allongée borgne formant conduit latéral 17 permettant, dans la configuration illustrée figure 1, de mettre en communication les ouvertures 14 et 15, et donc l'enceinte tampon 1 du système d'alimentation avec la chambre de dosage 5.

La seconde partie 18 du cylindre de distribution, adjacente à la précédente, est une partie pleine formant élément d'isolement.

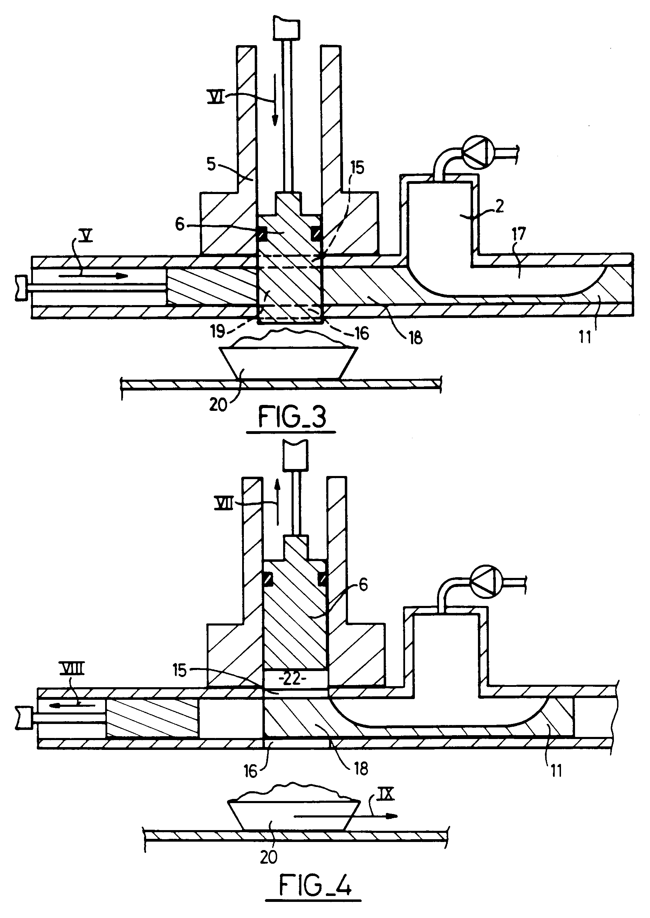

Enfin, la troisième partie, adjacente à la partie d'isolement 18, comporte une ouverture traversant le cylindre de distribution de part en part formant conduit axial 19 (alors que le conduit latéral 17 est un conduit borgne) ayant même section que la chambre de dosage et les ouvertures 15 et 16 de manière à permettre au piston doseur 6 de traverser l'ensemble de ces éléments lorsque le conduit axial 19 sera placé au droit de la chambre de dosage (ce qui correspond à la configuration de la figure 3, qui sera explicitée plus loin).

Enfin, au-dessous de ce dispositif de dosage, un récipient 20 tel qu'une barquette, une boîte,... peut être amené juste au-dessous de l'ouverture 16 grâce à un convoyeur 21 permettant de placer cette boîte pour la remplir et de l'évacuer une fois celle-ci remplie.

On va maintenant décrire le fonctionnement de ce dispositif de dosage.

Dans la position de départ, illustrée figure 1, le piston doseur 6 est abaissé à sa position de référence où il est en contact avec la face supérieure du tiroir distributeur 11, sans laisser subsister de volume mort ni au fond la chambre de dosage 5 ni à l'endroit de l'ouverture 15 du cylindre de distribution 10.

Le tiroir distributeur 11 est placé à sa position gauche extrême (telle que représentée sur la figure), de telle sorte que le conduit latéral 17 mette en communication l'enceinte tampon 1 avec la chambre de dosage 5, l'ouverture inférieure 16 restant occultée du fait que le conduit latéral 17, borgne, ne traverse pas le tiroir distributeur 11.

On peut alors (flèche I de la figure 2) pomper le produit pâteux de manière à remplir la chambre de dosage 5, jusqu'à ce que le piston atteigne (flèche II) sa position supérieure extrême ; la dose de produit pâteux à délivrer est alors définie par le volume de la chambre de dosage 5 (augmenté de celui de l'ouverture 15, l'épaisseur du cylindre de distribution 10 n'étant jamais nulle).

Le remplissage de la chambre de dosage 5 peut être réalisé soit par l'action de la pompe 4 (pression positive), soit par soulèvement actif du piston doseur 6 par le vérin 8 (pression négative), soit par une combinaison de ces deux actions.

On peut alors amener (flèche III) le récipient 20 à remplir au-dessous de l'ouverture 16, toujours occultée.

On procède ensuite à l'isolement de la dose en déplaçant vers la droite le tiroir distributeur 11 (flèche IV de la figure 3) de manière que sa partie pleine 18 vienne en regard de l'ouverture 15 ; le conduit latéral 17 étant ainsi isolé, on interrompt le débit de produit pâteux depuis l'enceinte tampon 2.

Le tiroir distributeur 11 subit ensuite un déplacement supplémentaire vers la droite (flèche V) pour arriver à sa position extrême (la position illustrée sur la figure 3), où le conduit axial 19 va se trouver au droit des deux ouvertures 15 et 16, qui sont ainsi mises en communication. On peut alors abaisser (flèche VI) le piston doseur 6 de manière à refouler la dose de produit pâteux initialement contenue dans la chambre de dosage jusque dans le récipient 20 qui a été placé au-dessous de l'ouverture 16 au cours de l'étape précédente.

Très avantageusement, l'abaissement du cylindre est réalisé jusqu'à une position qui lui permet, après avoir traversé l'ouverture 15, le conduit axial 19 et l'ouverture 16, d'affleurer cette ouverture ou d'en émerger légèrement, ce qui permet de ne laisser subsister aucune quantité de produit pâteux dans des volumes morts des divers éléments du dispositif.

On remonte ensuite le piston doseur 6 (flèche VII de la figure 4) légèrement au-dessus de sa position de référence, de manière à laisser subsister entre le tiroir distributeur 11 et le piston doseur 6 un intervalle 22 où sera entièrement entraînée et isolée la masse de produit pâteux adhérente restant attachée au piston après refoulement.

On déplace alors le tiroir distributeur 11 vers la gauche (flèche VIII) de manière que sa région pleine 18 vienne en regard des ouvertures 15 et 16 (position illustrée figure 4).

De la sorte, après avoir entraîné la masse adhérente avec ses fibres éventuelles de produit qui restent accrochées au piston doseur, on isole la chambre de dosage et le récipient 20 rempli, de sorte que l'on pourra évacuer ce dernier (flèche IX) sans risque de souillure de ses zones de fermeture, après avoir déplacé le tiroir/distributeur 11 vers la droite (flèche X).

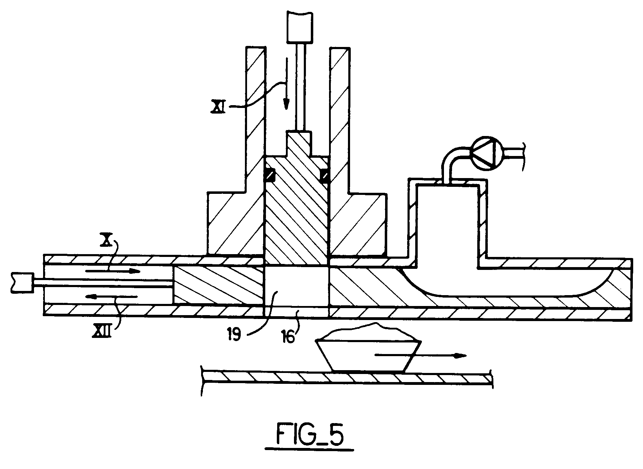

L'étape suivante consiste à abaisser le piston doseur 6 jusqu'à sa position de référence (flèche XI de la figure 5).

Ceci a pour effet de refouler la masse adhérente subsistante dans le conduit axial 19 ; bien entendu, les dimensions du tiroir distributeur 11 sont choisies de manière que, compte tenu de la consistance du produit pâteux, cette masse subsistante ne déborde pas par l'ouverture 16.

Le tiroir est ensuite déplacé vers la gauche (flèche XII), ce qui lui permet de revenir à la position initiale (celle de la figure 1) ; la masse de produit pâteux subsistante dans le conduit axial 19 reste isolée dans ce conduit axial et sera entièrement expulsée à la prochaine phase de refoulement, en même temps que la dose contenue dans la chambre de dosage 5.

## Revendications

1. Un dispositif de dosage volumétrique de produits pâteux, notamment pour émulsions de viande ou d'autres protéines, caractérisé en ce qu'il comprend :
- une chambre de dosage (5) pourvue à l'une de ses extrémités d'une ouverture commune (15) de remplissage et de refoulement,
- dans cette chambre de dosage (5), un piston doseur (6) mobile axialement d'une position de référence, ne laissant pas subsister de volume résiduel à l'intérieur de la chambre de dosage (5), à une position relevée définissant le volume de dosage,
- des moyens (1-4) d'alimentation en produit pâteux sous pression,
- un cylindre de distribution (10), orienté transversalement par rapport à la chambre de dosage (5) et pourvu latéralement d'une première ouverture (15) coïncidant avec l'ouverture de remplissage et de refoulement du piston doseur (6), d'une deuxième ouverture (16) située dans l'axe longitudinal du piston doseur, en regard de cette première ouverture (15), et d'une troisième ouverture (14) décalée le long de l'axe d'un tiroir distributeur, par rapport aux deux premières et communiquant avec les moyens d'alimentation (1-4) en produit pâteux,
- dans ce cylindre de distribution (10), le tiroir distributeur (11) comporte un conduit latéral (17) de mise en communication entre deux points décalés l'un par rapport à l'autre le long de l'axe du tiroir distributeur (11), et un conduit axial (19) de mise en communication entre deux points situés en regard dans l'axe longitudinal du piston doseur, ce tiroir distributeur (11) étant mobile axialement entre, successivement :
a) une position de remplissage où le conduit latéral (17) met en communication lesdites première et troisième ouvertures (14,15) et occulte ladite deuxième ouverture (16) du cylindre de distribution de manière à permettre le remplissage de la chambre de dosage (5) par les moyens d'alimentation,
b) une position d'isolement où, après que le piston doseur (6) ait atteint sa position relevée, les trois ouvertures (14,15,16) du cylindre de distribution (10) sont occultées
c) une position de refoulement où, pendant que le piston doseur (6) est abaissé vers sa position de référence, la troisième ouverture (14) restant occultée, le conduit axial (19) met en communication lesdites première et deuxième ouvertures (15,16) de manière à refouler la dose de produit pâteux dans un récipient (20) préalablement placé en regard de la deuxième ouverture, la position limite inférieure du piston doseur (6) étant atteinte lorsque ce dernier affleure la deuxième ouverture (16) ou en émerge légèrement de manière à ne laisser subsister aucune quantité de produit pâteux dans les volumes morts du dispositif, et
d) à nouveau la position de remplissage précitée, après que le piston doseur (6) occupe sa position de référence
- des moyens (8,9,12,13) d'actionnement sélectif du piston doseur (6) et du tiroir distributeur (10), étant entendu que le diamètre extérieur du piston doseur (6) correspond au diamètre intérieur des première et deuxième ouvertures (15,16) ainsi que du conduit axial (19).

2. Le dispositif de la revendication 1 dans lequel, à la position (c) et après refoulement, le piston doseur (6) est relevé à une position intermédiaire au-dessus de sa position de référence, de manière à entraîner à distance du récipient la masse de produit pâteux adhérente restant attachée au piston (6) après refoulement.

3. Le dispositif de la revendication 2 dans lequel, entre les positions (c) et (f) précitées, le cylindre distributeur (10) passe par :
(d) une autre position d'isolement, permettant d'éloigner le récipient rempli, ainsi isolé de la masse de produit pâteux adhérente restant attachée au piston (6) après refoulement.

4. Le dispositif de l'une des revendications 2 ou 3 dans lequel, avant la position (f) précitée, le cylindre distributeur (10) passe par :
(e) une autre position de refoulement où le piston doseur (6) est déplacé de sa position intermédiaire vers sa position de référence de manière à refouler dans le conduit axial (19) la masse de produit pâteux adhérente restant attachée au piston (6), les dimensions de ce conduit axial étant choisies suffisantes pour que cette masse adhérente refoulée ne déborde pas du conduit axial par la seconde ouverture (16) du cylindre de distribution (10).

## Claims

1. A device for volumetric metering of pasty products, in particular for emulsions of meat or other proteins, characterized in that it comprises:
- a metering chamber (5) provided, at one of its ends, with a common filling and delivery opening (15),
- in this metering chamber (5), a metering plunger (6) movable axially from a reference position, leaving no residual volume remaining inside the metering chamber (5), to a raised position defining the metering volume,
- means (1 - 4) for supply of pasty product under pressure,
- a distribution cylinder (10) oriented transversely relative to the metering chamber (5) and provided laterally with a first opening (15) in line with the filling and delivery opening of the metering plunger (6), a second opening (16) situated in the longitudinal axis of the metering plunger, opposite this first opening (15), and a third opening (14) offset along the axis of a distributor slide relative to the first two and communicating with the means (1-4) for supply of pasty product,
- in this distribution cylinder (10), the distributor slide (11) comprises a lateral conduit (17) for communication between two points offset relative to each other along the axis of the distributor slide (11), and an axial conduit (19) for communication between two points situated opposite in the longitudinal axis of the metering plunger, this distributor slide (11) being movable axially between, successively:
(a) a filling position, in which the lateral conduit (17) brings the said first and third openings (14, 15) into communication and closes the said second opening (16) of the distribution cylinder in such a way as to permit filling of the metering chamber (5) via the supply means,
(b) an isolating position in which, after the metering plunger (6) has reached its raised position, the three openings (14, 15, 16) of the distribution cylinder (10) are closed,
(c) a delivery position in which, while the metering plunger (6) is lowered towards its reference position, the third opening (14) remaining closed, the axial conduit (19) brings the said first and second openings (15, 16) into communication in such a way as to deliver the portion of pasty product into a container (20) previously placed opposite the second opening, the lower limit position of the metering plunger (6) being reached when the latter is flush with the second opening (16) or emerges slightly therefrom in such a way as to leave no quantity of pasty product in the dead volumes of the device, and
(d) again the filling position mentioned above, after the metering plunger (6) occupies its reference position; and
- means (8, 9, 12, 13) for selective actuation of the metering plunger (6) and the distributor slide (11), it being understood that the external diameter of the metering plunger (6) corresponds to the internal diameter of the first and second openings (15, 16) as well as of the axial conduit (19).

2. The device of Claim 1 in which, in position (c) and after delivery, the metering plunger (6) is raised to an intermediate position above its reference position in such a way as to move, to a distance from the container, the adherent mass of pasty product remaining attached to the plunger (6) after delivery.

3. The device of Claim 2 in which, between positions (c) and (f) mentioned above, the distributor cylinder (10) passes through:
(d) another isolating position making it possible to remove the filled container, thereby isolated from the adherent mass of pasty product remaining attached to the plunger (6) after delivery.

4. The device of one of Claims 2 or 3 in which, before position (f) mentioned above, the distributor cylinder (10) passes through:
(e) another delivery position in which the metering plunger (6) is displaced from its intermediate position towards its reference position in such a way as to deliver into the axial conduit (19) the adherent mass of pasty product remaining attached to the plunger (6), the dimensions of this axial conduit being chosen sufficient so that this delivered adherent mass does not extend beyond the axial conduit via the second opening (16) of the distribution cylinder (10).

## Patentansprüche

1. Vorrichtung zum volumetrischen Dosieren pastenartiger Erzeugnisse, insbesondere für Emulsionen von Fleisch oder anderen Proteinen, dadurch gekennzeichnet, daß sie umfaßt:
- eine Dosierungskammer (5), die an einem ihrer Enden mit einer gemeinsamen Füll- und Förderöffnung (15) versehen ist,
- in dieser Dosierungskammer (5) einen Dosierkolben (6), der aus einer Bezugsposition, in der kein Restvolumen im Inneren der Dosierungskammer (5) verbleibt, in eine hochgezogene Position, die das Dosiervolumen festlegt, axial beweglich ist,
- eine Einrichtung (1 - 4) zur Versorgung mit pastenartigem Erzeugnis unter Druck,
- einen Verteilkolben (10), der quer zur Dosierungskammer (5) ausgerichtet ist und seitlich mit einer ersten Öffnung (15) versehen ist, die mit der Füll- und Förderöffnung des Dosierkolbens (6) übereinstimmt, mit einer zweiten Öffnung (16), die sich in der Längsachse des Dosierkolbens gegenüber dieser ersten Öffnung (15) befindet, und mit einer dritten Öffnung (14), die gegenüber den ersten beiden entlang der Achse des Verteilschiebers versetzt ist und mit der Einrichtung (1-4) zur Versorgung mit pastenartigem Erzeugnis in Verbindung steht,
- im Verteilzylinder (10) einen Verteilschieber (11) mit einer seitlichen Leitung (17) zur Verbindung zwischen zwei gegeneinander längs der Achse des Verteilschiebers (11) versetzten Punkten, und mit einer axialen Leitung (19) zur Verbindung zwischen zwei einander gegenüberliegend angeordneten Punkten in der Längsachse des Dosierkolbens, wobei der Verteilschieber (11) axial beweglich ist, aufeinanderfolgend zwischen:
a) einer Füllposition, in der die seitliche Leitung (17) die erste und dritte Öffnung (14, 15) miteinander verbindet und die zweite Öffnung (16) des Verteilzylinders abdeckt, so daß die Füllung der Dosierungskammer (5) mittels der Versorgungseinrichtung möglich ist,
b) einer Trennposition, in der die drei Öffnungen (14, 15, 16) des Verteilzylinders (10) abgedeckt sind, nachdem der Dosierkolben (6) seine hochgezogene Stellung erreicht hat,
c) einer Förderposition, in der, während der Dosierkolben (6) in seine Bezugsposition abgesenkt wird, wobei die dritte Öffnung (14) abgedeckt bleibt, die axiale Leitung (19) die erste und zweite Öffnung (15, 16) miteinander verbindet, so daß die Dosis des pastenartigen Erzeugnisses in ein Behältnis (20), das zuvor gegenüber der zweiten Öffnung gebracht wurde, gefördert wird, wobei die untere Grenzposition des Dosierkolbens (6) erreicht ist, wenn dieser bündig mit der zweiten Öffnung (16) ist oder leicht daraus hervorsteht, so daß keinerlei Menge des pastenartigen Erzeugnisses in den toten Räumen der Vorrichtung verbleibt, und
d) erneut der vorerwähnten Förderposition, nachdem der Dosierkolben (6) seine Bezugsposition einnimmt,
- Mittel (8, 9, 12, 13) zur wahlweisen Betätigung des Dosierkolbens (6) und des Verteilschiebers (11), wobei der Außendurchmesser des Dosierkolbens (6) dem Innendurchmesser der ersten und zweiten Öffnung (15, 16) und der axialen Leitung (19) entspricht.

2. Vorrichtung nach Anspruch 1, dadurch gekennzeichnet, daß der Dosierkolben (6) in der Position (c) und nach dem Fördern in eine Zwischenposition oberhalb seiner Bezugsposition angehoben wird, so daß die Masse des pastenförmigen Erzeugnisses, die nach dem Fördern am Kolben (6) haften bleibt, in einen Abstand zum Behältnis gezogen wird.

3. Vorrichtung nach Anspruch 2, dadurch gekennzeichnet, daß der Verteilzylinder (10) zwischen den vorgenannten Stellungen (c) und (f) über:
(d) eine weitere Abtrennposition geht, die das Entfernen des gefüllten Behältnisses gestattet, das auf diese Weise von der am Kolben (6) nach dem Fördern anhaftenden Masse des pastenartigen Erzeugnisses getrennt wird.

4. Vorrichtung nach einem der Ansprüche 2 oder 3, dadurch gekennzeichnet, daß der Verteilzylinder (10) vor der vorgenannten Position (f) über:
(e) eine weitere Förderposition geht, in der der Dosierkolben (6) aus seiner Zwischenposition in Richtung auf seine Bezugsposition verschoben wird, so daß die am Kolben (6) anhaftende Masse des pastenartigen Erzeugnisses in die axiale Leitung (19) gefördert wird, wobei die Abmessungen dieser axialen Leitung ausreichend gewählt sind, so daß diese anhaftende, geförderte Masse nicht über die zweite Öffnung (16) des Verteilzylinders (10) überläuft.
